Europäisches Patentamt

European Patent Office

Office européen des brevets

(19)

(11) Publication number: **0 337 515 A2**

(12) # EUROPEAN PATENT APPLICATION

(21) Application number: **89111243.5**

(22) Date of filing: **07.10.86**

(51) Int. Cl.4: **B01D 53/34 , B01D 53/30**

(43) Date of publication of application:
**18.10.89 Bulletin 89/42**

(60) Publication number of the earlier application in accordance with Art.76 EPC: **0 263 195**

(84) Designated Contracting States:
**DE FR GB SE**

(71) Applicant: **NIPPON KOKAN KABUSHIKI KAISHA**
**1-2 Marunouchi 1-chome Chiyoda-ku Tokyo 100(JP)**

(72) Inventor: **Ase, Hajime c/o Patent Division Nippon Kokan K.K. 1-2, 1-chome, Marunouchi Chiyoda-ku Tokyo(JP)**

(74) Representative: **Popp, Eugen, Dr.**
**MEISSNER, BOLTE & PARTNER Postfach 86 06 24**
**D-8000 München 86(DE)**

(54) **Method and apparatus for controlling the injection amount of ammonia for denitration of exhaust gas.**

(57) A method of control of an exhaust gas denitration apparatus for controlling the amount of ammonia injected into the exhaust gas to control the nitrogen oxide concentration in the exhaust gas exiting from said denitration apparatus to a desired value, the said method comprising:

estimating the nitrogen oxide concentration $(x_1(t))$ corresponding to an amount of ammonia injected into said denitration apparatus at instant t from the dynamic characteristics of a non-catalytic denitration reaction;

obtaining a difference $e(t) = y^*(t) - \{y(t) - x_2(t)\}$ using an estimated concentration $x_2(t) = x_1(t) - x_1(t - l)$ obtained through correction of said estimated concentration $x_1(t)$ with respect to a predetermined time $l$, set value $y^*(t)$ of nitrogen oxide concentration at instant t and measurement $y(t)$ of nitrogen oxide concentration at instant t; and

effecting feedback control with respect to said difference $e(t)$.

F I G. 1

## Method and apparatus for controlling the injection amount of ammonia for denitration of exhaust gas

This invention relates to a method and apparatus for controlling the injection amount of ammonia $NH_3$ into an exhaust gas of a refuse incinerator for denitration.

As is well known in the art, when refuse is burned in an incinerator, nitrogen oxide $NO_x$ is discharged into atmosphere, giving rise to pollution problems. To reduce the nitrogen oxide $NO_x$, ammonia $NH_3$ is injected into the high temperature exhaust gas at the outlet of the refuse incinerator. However, the amount of nitro-gen oxide discharged from the refuse incinerator varies continuously, depending on the kind and amount of refuse deposited in the incinerator. Therfore, if a method of injecting a constant amount of ammonia is employed, it is sometimes possible that the permissible level of $NO_x$ discharge is exceeded.

It is desirable to control the amount of ammonia injected into the high temperature exhaust gas as an instant result of measurement. However, there is a time delay or process delay in the order of minutes from the instant the ammonia is injected until the results of measurement of the nitrogen oxide are determined, and it is therefore extremely difficult to control the amount of injected ammonia to the proper degree. Actually, in addition to the cases when the permissible amount of discharged nitrogen oxide is exceeded, there are also instances when excessive ammonia is discharged, resulting in an unpleasant smell inside the refuse incineration plant. Further, when ammonia is excessively injected, there is an increase in the operation costs of the refuse incineration plant due to consumption of ammonia, in addition to creating the problem of the unpleasant smell.

An object of the present invention is to provide a method and an apparatus of control of an exhaust gas denitration apparatus for controlling the amount of injected ammonia free from the effect of time delay.

According to the invention, there is provided a method of control of an exhaust gas denitration apparatus for controlling the amount of ammonia injected into the exhaust gas to control the nitrogen oxide concentration in the exhaust gas exiting from said denitration apparatus to a desired value, characterized by comprising:
estimating the nitrogen oxide concentration ($x_1(t)$) corresponding to an amount of ammonia injected into said denitration apparatus at instant t from the dynamic characteristics of a non-catalytic denitration reaction;
obtaining a difference $e(t) = y^*(t) - \{y(t) - x_2(t)\}$ using an estimated concentration $x_2(t) = x_1(t) - x_1(t - l)$ obtained through correction of said estimated concentration $x_1(t)$ with respect to a predetermined time $l$, set value $y^*(t)$ of nitrogen oxide concentration at instant t and measurement $y(t)$ of nitrogen oxide concentration at instant t; and
effecting feedback control with respect to said difference $e(t)$.

According to the invention, there is provided an apparatus for denitrating exhaust gas for controlling the injection amount of ammonia for controlling.the nitrogen oxide concentration in the exhaust gas from said denitrating apparatus to a predetermined desired value, characterized by comprising:
means (41) for estimating the nitrogen ammonia concentration ($= x_1(t)$) with respect to the amount of ammonia injected into said denitrating apparatus at instant t from the dynamic characteristic of non-catalytic denitrating reaction;
means (41) for obtaining a corrected value ($x_2(t) = x_1(t) - x_1(t - l)$ through correction of said estimated value $x_1(t)$ with respect to a predetermined period $l$ of time;
means (16a) for obtaining a difference $e(t) = y^*(t) -y(t) + x_2(t)$ using the corrected estimated value, set value $y(t)$ of nitrogen oxide at instant t and measured value $y(t)$ of nitrogen oxide at instant t; and
means (42) for effecting a feedback control with respect to said difference $e(t)$.

This invention can be more fully understood from the following detailed description when taken in conjunction with the accompanying drawings, in which:

Fig. 1 is a block diagram showing an embodiment of the invention;

Fig. 2 is a flow chart showing the operation of a time delay correction device shown in Fig. 1;

Fig. 3 is a graph showing the results of control according to Fig. 1;

Fig. 4 is a graph showing the relation between the temperature of an ammonia injection section and denitration factor; and

Fig. 5 is a graph showing the relation between the temperature of the ammonia injection section and process delay.

Now, preferred embodiments of the invention will be described in detail with reference to the drawings.

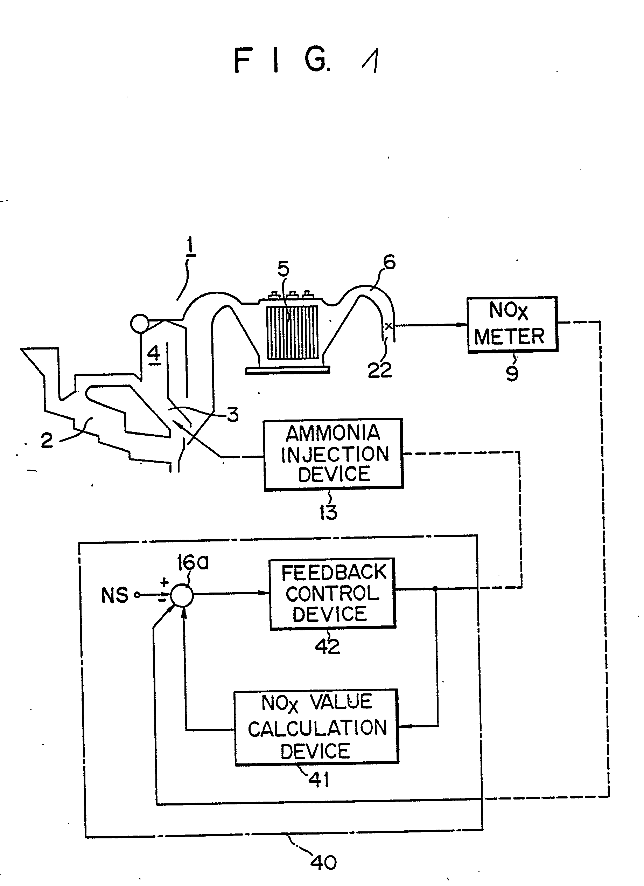

Referring to Fig. 1, there is shown a refuse incinerator. Incinerator body 1 includes burning chamber 2, ammonia injection section 3, heat exchange section 4, electric dust collection section 5 and exhaust gas detection section 6. Refuse is deposited into burning chamber 2 through refuse inlet (not shown). The refuse is then burnt. High temperature gas produced as a result of the burning is passed through ammonia injection section 3 to heat exchange section 4. In heat exchange section 4, steam is generated by utilizing the heat of the high temperature exhaust gas, and the steam is then supplied to the outside for power generation, for instance. The exhaust gas, having been reduced in temperature, is fed to dust collector 5 for dust collection, then fed to exhaust gas detection section 6 and then is discharged from outlet 22.

In this embodiment, there is provided $NH_3$ injection amount control system 40 for controlling the $NO_x$ concentration to $NO_x$ set value NS by injecting $NH_3$ according to $NO_x$ concentration measured by $NO_x$ concentration meter 9.

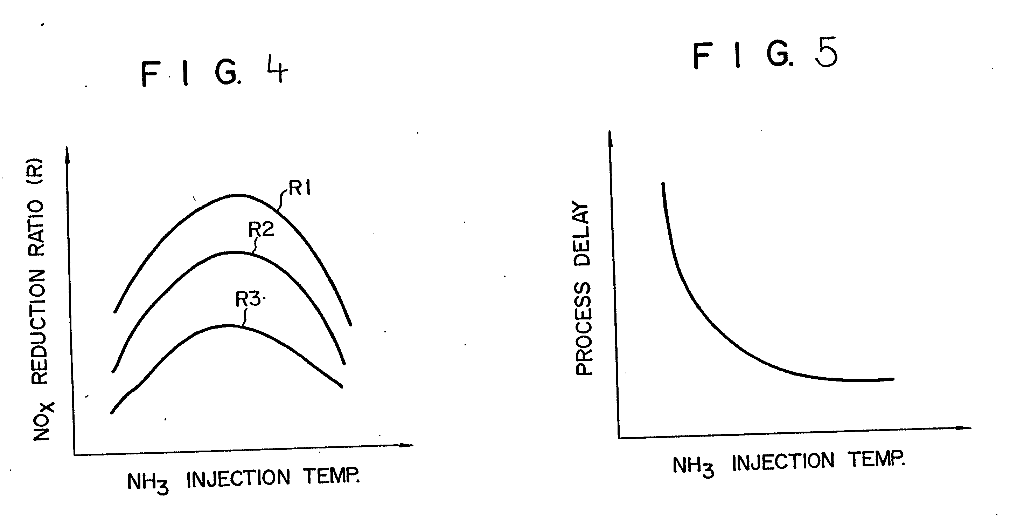

$NH_3$ injection amount control system 40 includes $NO_x$ value calculation device 41, which has an $NO_x$ value estimation function for estimating $NO_x$ value from the dynamic function of a non-catalytic denitration reaction for the $NH_3$ injection amount and a time correction function for correcting time from the injection of $NH_3$ till the appearance of the result of reaction, difference calculation device 16a for obtaining the difference between the estimated $NO_x$ value and $NO_x$ value measured by $NO_x$ meter 9 and $NO_x$ set value NS, and feedback control system 42 for controlling the injection amount of $NH_3$ according to the difference obtained in difference calculation device 16a. The $NO_x$ value is estimated by making use of the characteristics of a non-catalytic denitration reaction between $NO_x$ and $NH_3$, for instance. This characteristic greatly depends on the temperature conditions (see Fig. 4 and 5) and amount of $NO_x$ generated as a result of burning. The correction time means the time for mixing and reaction of $NO_x$ and $NH_3$ and there is a delay in the order of minutes until the result of measurement of the $NO_x$ value appears. Further, there is a delay in the temperature of injection section 3. These times have to be taken into consideration.

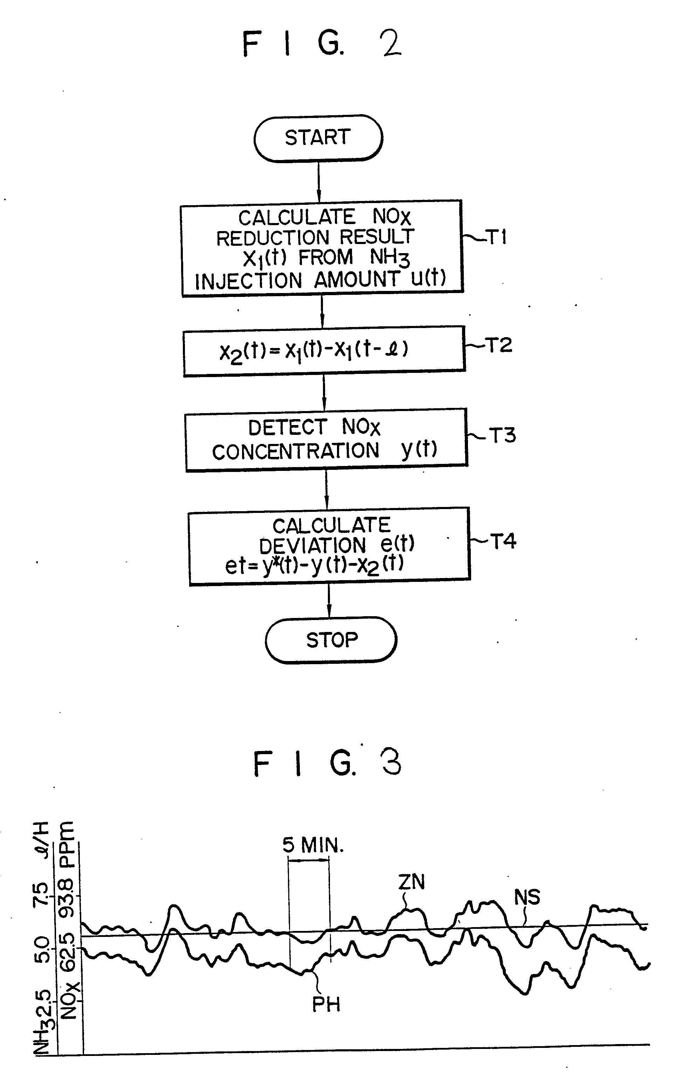

A method of control in this embodiment having the above construction will now be described. Feedback control system 42 of $NH_3$ injection amount control system 40 determines the injection amount of $NH_3$ at instant t and feeds corresponding data as its output to $NH_3$ injection device 13. When $NO_x$ value calculation device 41 receives the output of feedback control system 42, i.e., injection amount u(t) of $NH_3$ at instant t, it estimates the $NO_x$ value on the basis of a model of dynamic characteristics of a non-catalytic denitration reaction to obtain estimated $NO_x$ value $x_1(t)$ in step T1 in Fig. 2. Since there is a delay time $\ell$ involved until the effect of injection of $NH_3$ by $NH_3$ injection device 13 is obtained, the estimated $NO_x$ value is compensated for the delay time in step T2. The corrected estimation $NO_x$ value $x_1(t)$ is

$$x_2(t) = x_1(t) - x_1(t - \ell)$$

where $x_1(t - \ell)$ is the value of $x_1$ time $\ell$ ago. In addition to $NO_x$ set value $y^*(t)$ at instant t, $NO_x$ measurement value y at instant t is fed from $NO_x$ meter 9 to difference calculation device 16a in step T3. In step T4, difference calculation device 16a performs calculation $y^*(t) - y(t) - x_2(t)$ to obtain deviation or difference e(t), which is fed to feedback control system 42. Feedback control system 42 obtains the injection amount of $NH_3$ through a PI (P: proportion, I: integration) operation or PID (D: differentiation) operation according to the difference e(t) from difference calculation device 16a. The $NH_3$ injection amount data thus obtained is fed to $NH_3$ injection device 13 to inject a desired amount of $NH_3$ into the exhaust gas, whereby the $NO_x$ value may be controlled to a desired predetermined value below the limit value. Fig. 3 is a view showing the relation between $NH_3$ (PH) and $NO_x$ - (ZN) in an incineration plant. It is shown that the $NO_x$ value is controlled to the set value 5 minutes after the injection of $NH_3$.

In Fig. 4, R1 to R3 show ratios of $NH_3/NO_x$. As is seen from Fig. 4, the denitration factor R is increased with an increasing $NH_3$ amount for the same amount of $NO_x$. With temperature variations, however, the denitration factor is reduced even when the $NH_3$ amount is high. Further, as is seen from Fig. 5, the delay of process varies greatly with temperature variations.

As has been shown, in the above embodiment the difference is obtained by taking into considerations the time until the apperance of the result of measurement of $NO_x$ after injection of $NH_3$, and the difference thus obtained is used to effect feedback control so as to obtain the injection amount of $NH_3$. It is thus possible to provide a method and an apparatus for controlling an exhaust gas denitration apparatus, which can effect satisfactory denitration control free from the effect of time delay, hold the $NO_x$ value in the neighborhood of a preset value without injection of extra $NH_3$ and reliably remove $NO_x$ in a predetermined range.

## Claims

1. A method of control of an exhaust gas denitration apparatus for controlling the amount of ammonia injected into the exhaust gas to control the nitrogen oxide concentration in the exhaust gas exiting from said denitration apparatus to a desired value, characterized by comprising:
estimating the nitrogen oxide concentration $(x_1(t))$ corresponding to an amount of ammonia injected into said denitration apparatus at instant t from the dynamic characteristics of a non-catalytic denitration reaction;

obtaining a difference $e(t) = y^*(t) - \{y(t) - x_2(t)\}$ using an estimated concentration $x_2(t) = x_1(t) - x_1(t - t)$ obtained through correction of said estimated concentration $x_1(t)$ with respect to a predetermined time $t$, set value $y^*(t)$ of nitrogen oxide concentration at instant t and measurement $y(t)$ of nitrogen oxide concentration at instant t; and

effecting feedback control with respect to said difference $e(t)$.

2. An apparatus for denitrating exhaust gas for controlling the injection amount of ammonia for controlling the nitrogen oxide concentration in the exhaust gas from said denitrating apparatus to a predetermined desired value, characterized by comprising:

means (41) for estimating the nitrogen ammonia concentration ($= x_1(t)$) with respect to the amount of ammonia injected into said denitrating apparatus at instant t from the dynamic characteristic of non-catalytic denitrating reaction;

means (41) for obtaining a corrected value $x_2(t) = x \cdot (t) - x \cdot (t - t)$ through correction of said estimated value $x \cdot (t)$ with respect to a predetermined period $t$ of time;

means (16a) for obtaining a difference $e(t) = y^*(t) - y(t) + x_2(t)$ using the corrected estimated value, set value $y(t)$ of nitrogen oxide at instant t and measured value $y(t)$ of nitrogen oxide at instant t; and

means (42) for effecting a feedback control with respect to said difference $e(t)$.

# F I G. 1

# F I G. 2

```
        ┌─────────┐
        │  START  │
        └────┬────┘
             │
  ┌──────────────────────┐
  │   CALCULATE  NOx      │
  │  REDUCTION RESULT     │─ T1
  │  X₁(t) FROM NH₃       │
  │ INJECTION AMOUNT u(t) │
  └──────────┬───────────┘
             │
  ┌──────────────────────┐
  │  X₂(t)=X₁(t)-X₁(t-ℓ)  │─ T2
  └──────────┬───────────┘
             │
  ┌──────────────────────┐
  │   DETECT  NOx         │─ T3
  │ CONCENTRATION  y(t)   │
  └──────────┬───────────┘
             │
  ┌──────────────────────┐
  │    CALCULATE          │
  │  DEVIATION  e(t)      │─ T4
  │ et=y*(t)-y(t)-X₂(t)   │
  └──────────┬───────────┘
             │
        ┌─────────┐
        │  STOP   │
        └─────────┘
```

$T1$: CALCULATE NOx REDUCTION RESULT $X_1(t)$ FROM $NH_3$ INJECTION AMOUNT $u(t)$

$T2$: $X_2(t) = X_1(t) - X_1(t-\ell)$

$T3$: DETECT NOx CONCENTRATION $y(t)$

$T4$: CALCULATE DEVIATION $e(t)$ $\quad et = y^*(t) - y(t) - X_2(t)$

# F I G. 3

EP 0 337 515 A2

# F I G. 5

PROCESS DELAY

NH₃ INJECTION TEMP.

# F I G. 4

R1
R2
R3

NOx REDUCTION RATIO (R)

NH₃ INJECTION TEMP.